Europäisches Patentamt

European Patent Office

Office européen des brevets

(19)

(11) **EP 0 813 902 B1**

(12) **FASCICULE DE BREVET EUROPEEN**

(45) Date de publication et mention
de la délivrance du brevet:
**22.08.2001 Bulletin 2001/34**

(51) Int Cl.⁷: **B01J 2/30**, C05G 3/00,
C05C 1/02

(21) Numéro de dépôt: **97401292.4**

(22) Date de dépôt: **09.06.1997**

(54) **Procédé de traitement d'engrais par compositions hydrophobantes/antimottantes en vue de leur stockage en vrac**

Verfahren zur Behandlung von Düngemitteln mit hydrophoben Zusammensetzungen für ihre Lagerung als Schüttgut

Process for the treatment of fertilisers by hydrophobe compositions in view of their bulk storage

(84) Etats contractants désignés:
**AT BE DE DK ES FR GB GR IT NL PT**

(30) Priorité: **13.06.1996 FR 9607344**

(43) Date de publication de la demande:
**29.12.1997 Bulletin 1997/52**

(73) Titulaire: **CECA S.A.**
**92800 Puteaux (FR)**

(72) Inventeurs:
• **Navascues, Luc**
**75011 Paris (FR)**
• **Fouquay, Stéphane**
**76130 Mont Saint-Aignan (FR)**
• **Stachyra, Richard**
**60870 Rieux (FR)**
• **Lefebvre, Jean-Claude**
**93000 Bobigny (FR)**

(74) Mandataire: **Haicour, Philippe**
**ELF ATOCHEM S.A.,**
**Département Propriété Industrielle.**
**4-8, Cours Michelet,**
**La Défense 10**
**92091 Paris Cédex 42 (FR)**

(56) Documents cités:
EP-A- 0 113 687          EP-A- 0 389 331
EP-A- 0 574 306          FR-A- 2 536 300

**Description**

La présente invention a trait à un perfectionnement dans le traitement des engrais granulés en vue d'assurer un comportement satisfaisant au stockage.

Lors de leur stockage, les engrais sont le siège de modifications physiques qui altèrent l'indépendance des grains dont ils sont constitués. Il y a agglomération des grains entre eux, formation de blocs cristallisés dans le tas et/ ou de croûtes superficielles, parfois même prise en masse totale de tout le volume stocké. Ces phénomènes sont dus à l'humidité, soit l'humidité résiduelle consécutive à la fabrication même de l'engrais, soit celle qui provient d'une reprise d'eau par le matériau stocké sous hangars mais exposé à l'air ambiant. On y remédie à l'aide de traitements de finition par pulvérisation ou enrobage avec des compositions connues de l'homme de l'art sous les noms respectifs d'antimottants ou d'hydrophobants.

On a de longue date utilisé comme antimottants des compositions sous forme de poudre d'enrobage, de liquides pulvérisables à froid ou de pâtes fusibles pulvérisables à chaud, comportant comme produits actifs des alkylarylsulfonates, mais surtout des amines à chaînes grasses (FR 1.208.264, ARMOURS & CO) et leurs dérivés associées à divers ingrédients tels que poudres minérales inertes, huiles, cires, etc. On a, par la suite, amélioré l'efficacité des amines grasses, par exemple par un choix judicieux de la répartition de leurs chaînes grasses (FR 2.644.780, CECA S.A.) ou par association avec divers composés organiques susceptibles de développer une action synergique, entre autres avec des acides gras, des tensioactifs éthoxylés, des amides gras, des esters ortho-phosphoriques (EP 32.664, N.S.M.), ou encore les alkylarylsulfonates déjà cités (FR 2.460.706, C.F.P.I.). Aucune de ces compositions n'a encore résolu de manière véritablement satisfaisante le problème posé par le stockage en vrac, notamment celui de la formation importante de croûtes en surface des tas.

La demanderesse a maintenant trouvé de façon inattendue que des compositions associant une amine grasse, un alcool gras, un acide gras et l'acide phosphoreux ($PO_3H_3$) confèrent aux engrais granulés auxquels on les applique, une excellente hydrophobation tout en préservant leur résistance au mottage, améliorant en cela significativement la performance des compositions amine grasse / alcool gras revendiquées dans un précédent brevet EP 574.306 (1992). L'invention réside à la fois dans ces compositions hydrophobantes / antimottantes nouvelles et dans le procédé de traitement des engrais en vue d'améliorer leur comportement quant à leur reprise d'eau en atmosphère humide qui consiste à leur appliquer ces compositions.

Les compositions hydrophobantes / antimottantes selon l'invention comportent, en poids, de 5 à 25 % de monoalkylamines primaires R-NH2, de 5 à 25 % d'alcools gras R'-OH, de 1 à 8 % d'acide phosphoreux, de 2 à 15 % d'acides gras R''-COOH, le complément à 100 % étant constitué d'un vecteur huileux, compositions dans lesquelles :

→   le radical R des monoalkylamines primaires est une chaîne hydrocarbonée saturée à 16-22 atomes de carbone,
→   le radical R' des alcools gras est une chaîne alkyle ou alkylène comportant de 10 à 60 atomes de carbone,
→   le radical R'' des acides gras est une chaîne alkyle ou alkylène, comportant de 12 à 22 atomes de carbone.

Des amines utiles pour l'invention sont des mélanges d'amines dont la répartition de chaîne est celle des acides gras hydrogénés ou non de suif, de poisson ou de colza, ou encore d'amines naturelles ou synthétiques dont la répartition des chaînes est distribuée autour de 17/18 atomes de carbone avec un coefficient de dispersion égal ou supérieur à 2, comme les divulgue le brevet FR 2.644.780 CECA S.A.

Les alcools utiles pour l'invention sont des alcools naturels ou synthétiques répondant à la définition donnée plus haut, par exemple l'alcool octadécylique (stéarylique) , l'alcool arachidique, l'alcool béhénylique.

La qualité de l'acide phosphoreux importe peu. On utilise volontiers l'acide commercial à 98,5 % minimum en cristaux blanc jaunâtre.

Les acides gras de la formulation, de préférence l'acide gras de suif hydrogéné ou non ou de colza hydrogéné ou non, sont nécessaires à la formulation, probablement parce qu'ils favorisent la compatibilité de l'acide phosphoreux très hydrophile avec le reste de la composition éminemment hydrophobe.

Le vecteur huileux est une huile minérale à caractère paraffinique ou naphténique, ou une huile végétale ou animale de type triglycéride, comportant le cas échéant des ingrédients ordinaires de formulation, notamment des cires macrocristallines ou un mélange de cire macro- et microcristallines.

Des compositions préférées de l'invention sont celles qui associent en poids, 2 à 5 % d'acide phosphoreux, 9 à 20 % d'amine de suif hydrogéné ou d'amines avec la distribution de chaînes décrite plus haut, 2 à 10 % d'alcool stéarylique, 2 à 5 % d'acide gras de suif hydrogéné et un complément à 100 % d'un vecteur huileux paraffinique contenant lui-même environ 10 % de cire microcristalline.

Les compositions selon l'invention se préparent très simplement par incorporation à chaud (80°C) de l'acide phosphoreux au mélange huile / amine / alcool / acide gras / cire, en agitant jusqu'à obtention d'un mélange homogène. Elles se présentent généralement sous l'aspect de solides pâteux à température ambiante.

Les compositions selon l'invention s'appliquent par pulvérisation à chaud, vers 80°C, sur les granulés de

EP 0 813 902 B1

l'engrais à traiter, lequel a été préalablement chargé à température ambiante dans un tambour enrobeur rotatif. La pulvérisation du produit fondu est effectuée préférentiellement par un système de pulvérisation à l'air. Le temps de séjour de l'engrais dans le tambour enrobeur est prolongé de quelques minutes (1 à 2 minutes environ) pour une meilleure homogénéisation de l'enrobage. Les quantités à déposer ainsi sont comprises entre 0,5 et 5 Kg/t d'engrais. Ce sont là des conditions tout à fait classiques, bien connues de l'homme de l'art.

Il n'est véritablement de façon d'estimer le comportement d'un engrais que de l'observer dans les conditions réelles de durée, volume et ambiance de son stockage et de sa manutention. Il existe toutefois des tests accélérés qui permettent de prévoir quelle sera la tendance de l'engrais et de porter un jugement sur la valeur du traitement appliqué. Ceux qui ont été retenus ici sont des essais de laboratoire, d'une part le test dit de mottage, qui permet d'estimer la tendance à la prise en masse d'un engrais traité ou non, et d'autre part le test dit d'hydrophobation, par lequel on apprécie le comportement général de l'engrais exposé à un environnement humide.

I) Le test de mottage

Ce test fournit un classement qui est assez fidèlement corrélé avec les résultats industriels. Il consiste à conditionner les granulés d'engrais par exposition plus ou moins prolongée à une atmosphère d'humidité relative supérieure à l'humidité relative critique de l'engrais pendant des durées variables, puis à en former par compression statique des éprouvettes cylindriques dont on mesure la densité apparente et la cohésion.

a) Conditionnement

Le conditionnement de l'engrais est effectué dans les conditions suivantes :

- température        20°C
- humidité relative        75 %
- durée        0 à 1 heure

b) Confection des éprouvettes

Les éprouvettes sont confectionnées avec 140 g d'engrais, dans des moules dont le diamètre intérieur est de 5 cm. Les conditions de leur fabrication sont les suivantes :

| Type d'engrais | Pression de moulage (bars) | Durée de compression (heures) |
|---|---|---|
| Ammonitrate | 10 | 16 |
| NPK | 5 | 16 |

c) Mesures

On définit un indice de mottage (IM) par la relation :

$$IM = \Delta R/\Delta d,$$

où

- $\Delta d$ est la variation de la densité apparente d de l'éprouvette;
- $\Delta R$ est la variation de sa résistance R à la rupture.

La densité apparente (d) est déterminée à partir de la mesure de la hauteur de l'éprouvette cylindrique dont le diamètre constant est connu. La cohésion (R) est prise comme la résistance à la rupture en traction, obtenue elle-même à partir de la mesure de la résistance à la compression diamétrale, d'après la relation :

$$R = 2.F/\pi.(f.h),$$

où

- F est la force de compression appliquée à la rupture,
- h est la hauteur de l'éprouvette,
- f est le diamètre de l'éprouvette.

Les mesures de résistance à la compression sont effectuées à l'aide d'un dynamomètre, à la vitesse d'avancement de 30 mm/min.

d) Interprétation des résultats

Le rapport entre l'indice de mottage de l'engrais traité (IM) et l'indice de mottage témoin ($IM_o$) de l'engrais non traité est l'indice relatif de mottage (IRM) :

$$(IRM) = (IM) / (IM_o)$$

qu'on reprend dans le calcul d'un pourcentage de protection $P_M$ (%)

$$P_M (\%) = 100. [1 - (IRM)]$$

qui constitue une bonne estimation du niveau de protection apporté par le traitement d'antimottage.

II) Le test d'hydrophobation

e) Exposition à l'humidité ambiante

Une prise d'essai de 80 g d'engrais est placée dans un bécher plastique (hauteur 70 mm, diamètre 50 mm) que l'on enferme dans une enceinte climatique, puis pesée pour déterminer la prise pondérale d'humidité de son contenu. L'opération est répétée toutes les heures pendant sept heures. On mène au moins deux essais de front, l'un sur l'engrais pris en l'état, l'autre sur l'engrais enrobé avec la composition antimottante / hydrophobante.

f) Interprétation des résultats

Si l'on porte graphiquement la prise de poids de l'engrais en fonction du temps, on constate que le pourcentage de reprise d'eau rapporté à la masse initiale de l'engrais évolue suivant une loi pratiquement linéaire avec la durée de l'exposition. On peut, dès lors, déterminer l'efficacité de la composition hydrophobante grâce à un indice de reprise d'humidité, ou indice d'humidité (IH) défini par la relation :

$$IH = \Delta(H2O)/\Delta t$$

où $\Delta$(H20) est la variation de poids de l'engrais due à la reprise d'eau pendant l'intervalle de temps $\Delta t$.
Le rapport entre l'indice d'humidité de l'engrais traité (IH) et l'indice d'humidité témoin ($IH_o$) de l'engrais non traité est l'indice d'humidité relatif (IRH) :

$$(IRH) = (IH) / (IH_o)$$

qu'on reprend dans le calcul d'un pourcentage de protection $P_H$ (%) :

$$P_H (\%) = 100. [1 - (IRH)]$$

qui constitue une bonne estimation du niveau de protection apporté par le traitement d'hydrophobation.
On estime qu'un engrais traité aura un comportement satisfaisant au stockage en vrac si son indice d'humidité relatif IRH est inférieur ou tout au plus égal à 0,7 (protection $P_H \geq 30$ %) et si son indice relatif de mottage IRM est inférieur à 0,25 (protection $P_M \geq 75$ %).

EXEMPLES

Les exemples et contre-exemples qui suivent illustrent l'invention. On y a comparé l'efficacité de différentes compositions huileuses. La formule 1 est une formulation classique qui ne comprend, à titre de principe actif, que des amines grasses. La formule 3, empruntée au brevet EP 574.306, exploite la seule synergie amine - alcool. Les formules 4 et 5, quant à elles, exploitent la synergie amine - alcool - acide gras - acide phosphoreux révélée par l'invention. L'huile utilisée est une huile paraffinique commercialisée par ELF AQUITAINE sous l'appellation PLASTELF 20P. La cire, lorsqu'elle est utilisée, est une cire brute microcristalline commercialisée par TOTAL sous le nom CIRE H5. On a pris comme stéarylamine le NORAM ® SH de CECA S.A., comme alcool, l'alcool stéarylique NACOL ® 18-94 de CONDEA et comme acide gras, l'acide gras 402 d'OLEOFINA. Certaines compositions, (formules 2 et 4), conformes ou non à l'enseignement du brevet français n°89 03727 (FR 2.644.780) contiennent en outre une certaine quantité d'amine C12/C14 (NORAM ® C de CECA S.A.) et d'amine C20/C22 (NORAM ® 42 de CEC S.A.) Ces compositions sont les suivantes :

| Formule | n°1 | n°2 | n°3 | n°4 | n°5 |
|---|---|---|---|---|---|
| Huile | 73,0 | 64,0 | 67,0 | 63,0 | 63,0 |
| Amine C18 | 17,1 | 11,3 | 17,0 | 10,0 | 6,6 |
| Amine C12/C14 | - | 2,85 | - | - | 1,7 |
| Amine C20/C22 | - | 2,85 | - | - | 1,7 |
| Alcool C18 | - | 9,0 | 6,0 | 9,0 | 9,0 |
| Acide gras SH | - | - | - | 5,0 | 5,0 |
| $PO_3H_3$ | - | - | - | 3,0 | 3,0 |
| Cire | 10,0 | 10,0 | 10,0 | 10,0 | 10,0 |

Exemple

Un ammonitrate prillé-grossi à 33,5 % d'azote en provenance de l'usine de Grand-Quevilly / Grande Paroisse, témoin ou enrobé en laboratoire avec les compositions 1 à 3 (selon l'art antérieur) ou les compositions 6 et 7 (selon l'invention) à raison de 1,2 Kg/t, est soumis à l'essai d'hydrophobation dans les conditions suivantes : 80 grammes d'engrais sont exposés sur un plateau pendant 7 heures à une atmosphère à 75 % d'humidité relative à la température de 25°C,. On a mesuré la reprise d'eau à l'issue de l'exposition et calculé le pourcentage de protection ($P_H$) relativement à la reprise d'eau. Indépendamment, on a effectué un contrôle du pouvoir antimottant de l'agent de traitement comme indiqué plus haut. Les résultats sont les suivants :

| Formule | Témoin | n°1 | n°2 | n°3 | n°4 | n°5 |
|---|---|---|---|---|---|---|
| $H_2O$ % | 0,842 | 0,831 | 0,547 | 0,547 | 0,463 | 0,455 |
| PH % | - | 1 | 35 | 35 | 45 | 46 |
| IM | 10,4 | 1,1 | 1,1 | 1,1 | 1,1 | 1,1 |
| $P_M$ (%) | - | 90 | 90 | 90 | 90 | 90 |

Ces résultats montrent l'amélioration du pouvoir hydrophobant apportée par les formules n°4 et 5 utilisées conformément à l'invention, formules qui se comportent par ailleurs comme d'excellents antimottants. On note, en outre, que l'engrais témoin se présente à la fin de l'essai sous forme d'un bloc plus ou moins mouillé, alors que l'engrais traité avec les antimottants n°4 et 5, ainsi qu'avec les antimottants n°2 et 3 (selon l'art antérieur), reste constitué de grains apparemment inaltérés et libres entre eux, aussi bien dans la masse qu'en surface. Ces résultats témoignent sans ambiguïté de l'efficacité supplémentaire apportée par l'adjonction d'acide gras et d'acide phosphoreux selon l'invention pour la conservation des qualités physiques de l'engrais, dans des conditions qui rappellent le stockage en vrac.

Ces résultats témoignent ici encore de la synergie inattendue des associations amine(s) grasse(s) / alcool (s) gras / acide(s) gras / acide phosphoreux quant à la reprise d'eau de l'engrais en atmosphère humide.

## Revendications

1. Composition pour de traitement des engrais en vue de limiter leur prise en masse et leur reprise d'eau lors de leur stockage en vrac en atmosphère humide comportant, en poids,

   de 5 à 25 % de monoalkylamines primaires R-NH2,
   de 5 à 25 % d'alcools gras R'-OH,
   de 1 à 8 % d'acide phosphoreux,
   de 2 à 15 % d'acides gras R'' - COOH,
   le complément à 100 % étant constitué d'un vecteur huileux,
   compositions dans lesquelles

   le radical R de la monoalkylamine primaire est une chaîne hydrocarbonée saturée à 16-22 atomes de carbone,
   le radical R' de l'alcool gras est une chaîne alkyle ou alkylène comportant de 10 à 60 atomes de carbone,
   le radical R'' de l'acide gras est une chaîne alkyle ou alkylène, comportant de 12 à 22 atomes de carbone.

2. Compositions selon la revendication 1, caractérisée en ce que la monoalkylamine primaire est une amine de suif hydrogéné.

3. Compositions selon la revendication 1, caractérisée en ce que la monoalkylamine primaire est un mélange d'amines dont la répartition de chaîne est distribuée autour de 17/18 atomes de carbone avec un coefficient de dispersion égal ou supérieur à 2.

4. Compositions selon la revendication 1, caractérisée en ce que l'alcool gras est l'alcool stéarylique.

5. Compositions selon la revendication 1, caractérisée en ce que l'acide gras est l'acide gras de suif hydrogéné.

6. Composition selon les revendications 1 à 5, caractérisée en ce qu'elle contient environ :

   9 à 20 % de stéarylamine,
   2 à 10 % d'alcool stéarylique,
   2 à 5 % d'acide phosphoreux,
   2 à 5 % d'acide gras de suif hydrogéné ou non d'acide gras de colza hydrogéné ou non,
   Le complément à 100 % étant constitué d'un vecteur huileux formé de 90 % d'huile paraffinique et 10 % de cire microcristalline.

7. Composition selon la revendication 1, caractérisée en ce qu'elle contient environ :

   9 à 20 % d'un mélange d'amines dont la répartition de chaîne est distribuée autour de 17/18 atomes de carbone avec un coefficient de dispersion égal ou supérieur à 2,
   2 à 10 % d'alcool stéarylique,
   2 à 5 % d'acide phosphoreux,
   2 à 5 % d'acide gras de suif hydrogéné ou non d'acide gras de colza hydrogéné ou non,

   Le complément à 100 % étant constitué d'un vecteur huileux formé de 90 % d'huile paraffinique et 10 % de cire microcristalline.

8. Procédé pour limiter la reprise d'eau des engrais granulés en atmosphère humide, caractérisé en ce que les granulés d'engrais sont revêtus d'une composition huileuse comportant une monoalkylamine primaire, un alcool gras, de l'acide phosphoreux et un acide gras, telle que décrite dans l'une ou l'autre des revendications 1 à 7.

9. Procédé pour limiter la reprise d'eau des engrais granulés selon la revendication 8, caractérisé en ce que la composition huileuse est appliquée à des doses comprises entre 0,5 et 5 Kg par tonne d'engrais.

**Patentansprüche**

1. Zusammensetzung zur Behandlung von Düngern im Hinblick auf die Beschränkung ihres Zusammenbackens und ihrer Sorption bei Lagerung der Dünger in loser Schüttung in feuchter Atmosphäre, umfassend

   5 bis 25 Gew.-% primäre Monoalkylamine R-NH$_2$,
   5 bis 25 Gew.-% Fettalkohole R'-OH,
   1 bis 8 Gew.-% phosphorige Säure,
   2 bis 15 Gew.-% Fettsäuren R"-COOH,

   wobei der Rest auf 100 Gew.-% aus einem ölartigen Träger besteht,
   wobei in diesen Zusammensetzungen

   der Rest R des primären Monoalkylamins eine gesättigte Kohlenwasserstoffkette mit 16-22 Kohlenstoffatomen darstellt,
   der Rest R' des Fettalkohols eine Alkyl- oder Alkylenkette mit 10 bis 60 Kohlenstoffatomen darstellt,
   der Rest R" der Fettsäure eine Alkyl- oder Alkylenkette mit 12 bis 22 Kohlenstoffatomen darstellt.

2. Zusammensetzungen nach Anspruch 1, dadurch gekennzeichnet, daß es sich bei dem primären Monoalkylamin um ein Amin von hydriertem Talg handelt.

3. Zusammensetzungen nach Anspruch 1, dadurch gekennzeichnet, daß es sich bei dem primären Monoalkylamin um eine Mischung von Aminen handelt, deren Kettenlängenverteilung um 17/18 Kohlenstoffatomen liegt, wobei der Dispersionskoeffizient gleich oder größer 2 ist.

4. Zusammensetzungen nach Anspruch 1, dadurch gekennzeichnet, daß es sich bei dem Fettalkohol um Stearylalkohol handelt.

5. Zusammensetzungen nach Anspruch 1, dadurch gekennzeichnet, daß es sich bei der Fettsäure um hydrierte Talgfettsäure handelt.

6. Zusammensetzung nach den Ansprüchen 1 bis 5, dadurch gekennzeichnet, daß sie ungefähr folgendes enthält:

   9 bis 20% Stearylamin,
   2 bis 10% Stearylalkohol,
   2 bis 5% phosphorige Säure,
   2 bis 5% hydrierte oder nichthydrierte Talgfettsäure, hydrierte oder nichthydrierte Rapsfettsäure,

   wobei der Rest auf 100% aus einem ölartigen Träger aus 90% Paraffinöl und 10% mikrokristallinem Wachs besteht.

7. Zusammensetzung nach Anspruch 1, dadurch gekennzeichnet, daß sie ungefähr folgendes enthält:

   9 bis 20% einer Mischung von Aminen, deren Kettenlängenverteilung um 17/18 Kohlenstoffatome liegt, wobei der Dispersionskoeffizient gleich oder größer 2 ist,
   2 bis 10% Stearylalkohol,
   2 bis 5% phosphorige Säure,
   2 bis 5% hydrierte oder nichthydrierte Talgfettsäure, hydrierte oder nichthydrierte Rapsfettsäure,

   wobei der Rest auf 100% aus einem ölartigen Träger aus 90% Paraffinöl und 10% mikrokristallinem Wachs besteht.

8. Verfahren zur Beschränkung der Sorption von Düngergranulat in feuchter Atmosphäre, dadurch gekennzeichnet, daß das Düngergranulat mit einer ölartigen Zusammensetzung umhüllt ist, die ein primäres Monoalkylamin, einen Fettalkohol, phosphorige Säure und eine Fettsäure wie in einem der Ansprüche 1 bis 7 beschrieben umfaßt.

9. Verfahren zur Beschränkung der Sorption von Düngergranulat nach Anspruch 8, dadurch gekennzeichnet, daß die ölartige Zusammensetzung in Dosierungen zwischen 0,5 und 5 kg pro Tonne Dünger aufgebracht wird.

**Claims**

1. Composition for treating fertilizers for the purpose of limiting their solidification and their water uptake during their bulk storage in a wet atmosphere containing, by weight,

   from 5 to 25% of primary monoalkylamines $R\text{-}NH_2$,
   from 5 to 25% of fatty alcohols R'-OH,
   from 1 to 8% of phosphorous acid,
   from 2 to 15% of fatty acids R"-COOH,

   the remainder to 100% being composed of an oily vector,
   in which compositions

   the R radical of the primary monoalkylamine is a saturated hydrocarbon chain containing 16-22 carbon atoms,
   the R' radical of the fatty alcohol is an alkyl or alkylene chain containing from 10 to 60 carbon atoms,
   the R" radical of the fatty acid is an alkyl or alkylene chain containing from 12 to 22 carbon atoms.

2. Compositions according to Claim 1, characterized in that the primary monoalkylamine is a hydrogenated tallow amine.

3. Compositions according to Claim 1, characterized in that the primary monoalkylamine is a mixture of amines, the chain allocation of which is distributed around 17/18 carbon atoms with a dispersion coefficient equal to or greater than 2.

4. Compositions according to Claim 1, characterized in that the fatty alcohol is stearyl alcohol.

5. Compositions according to Claim 1, characterized in that the fatty acid is hydrogenated tallow fatty acid.

6. Composition according to Claims 1 to 5, characterized in that it contains approximately:

   9 to 20% of stearylamine,
   2 to 10% of stearyl alcohol,
   2 to 5% of phosphorous acid,
   2 to 5% of optionally hydrogenated tallow fatty acid or of optionally hydrogenated rapeseed fatty acid,

   the remainder to 100% being composed of an oily vector formed from 90% of paraffinic oil and 10% of microcrystalline wax.

7. Composition according to Claim 1, characterized in that it contains approximately:

   9 to 20% of a mixture of amines, the chain allocation of which is distributed around 17/18 carbon atoms with a dispersion coefficient equal to or greater than 2,
   2 to 10% of stearyl alcohol,
   2 to 5% of phosphorous acid,
   2 to 5% of optionally hydrogenated tallow fatty acid or of optionally hydrogenated rapeseed fatty acid,

   the remainder to 100% being composed of an oily vector formed from 90% of paraffinic oil and 10% of micro-crystalline wax.

8. Process for limiting water uptake by granulated fertilizers in a wet atmosphere, characterized in that the fertilizer granules are coated with an oily composition containing a primary monoalkylamine, a fatty alcohol, phosphorous acid and a fatty acid, as described in one or other of Claims 1 to 7.

9. Process for limiting water uptake by granulated fertilizers according to Claim 8, characterized in that the oily composition is applied at doses of between 0.5 and 5 kg per tonne of fertilizer.